# EUROPÄISCHE PATENTANMELDUNG

(11) **EP 0 744 262 A2**
(43) Veröffentlichungstag der Anmeldung: **27.11.1996**
(21) Anmeldenummer: 96104841.0
(22) Anmeldetag: 27.03.1996
(51) Int. Cl.: B29B 17/02

(54) **Verfahren zur Aufbereitung von mit einem Überzug aus Weich-PVC versehenen Hart-PVC-Teilen zum Zwecke der Wiederverwertung**

(30) Priorität: 10.04.1995 DE 19512969
(71) Anmelder: Stock, Jürgen, Dr., 38104 Braunschweig (DE); Preiss, Joachim, Dipl.-Ing., 95497 Goldkronach (DE)
(72) Erfinder: Lösche, Harald, Dipl.-Ing., 24159 Kiel (DE)
(74) Vertreter: Lins, Edgar, Dipl.-Phys. Dr.jur.

(57) **Zusammenfassung**

Zum Ausarbeitung von mit einem Überzug aus Weich-PVC versehenen Hart-PVC-Teilen zum Zwecke der Wiederverwertung wird das Weich-PVC vom Hart-PVC-Teil mit Hilfe einen für das Weich-PVC geeigneten Weichmacher enthaltenden Flüssigkeit getrennt und werden die Hart-PVC-Teile und das abgelöste Weich-PVC separat zur Wiederverwendung aufbereitet. Der Weichmacher ist dabei zweckmäßigerweise der in dem Weich-PVC bereits enthaltene Weichmacher.

Ein Hauptanwendungsfall der Aufbereitung liegt in der Aufbringung einer Unterbodenschutzes auf Weich-PVC, bei der der Unterboden an einigen Stellen durch Hart-PVC-Abdeckschablonen von der Unterbodenschutzschicht ausgespart wird.

## Beschreibung

Verfahren zur Aufbereitung von mit einem Überzug aus Weich-PVC versehenen Hart-PVC-Teilen zum Zwecke der Wiederverwertung.

Hart-PVC-Teile die mit einem Weich-PVC-Überzug versehen sind entstehen beispielsweise bei der Aufbringung eines Unterbodenschutzes von Kraftfahrzeugen. Auf dem Unterboden gibt es einzelne kleine oder größere Bereiche, die von der Beschichtung mit Weich-PVC als Unterbodenschutz ausgenommen werden müssen.

Ein gebräuchliches und einfaches Verfahren, die Bereiche auszunehmen, besteht darin, sie mit formstabilen Kunststoffabdeckungen abzudecken (Abdeckschablonen).

Um Kunststoffgemische zu vermeiden, sind die früher üblichen Polystyrol-Abdeckungen zwischenzeitlich durch Hart-PVC-Abdeckungen ersetzt worden. Das entstehende Gemisch aus Hart-PCV und Weich-PVC läßt sich einer rentablen Wiederverwertung nicht zuführen.

Aus DE 43 02 276 C1 ist es daher bekannt, die mit Weich-PVC beschichteten Teile einer Wärmebehandlung zu unterziehen, durch die der Weichmacher aus dem Weich-PVC ausgetrieben wird. Dadurch wird das Weich-PVC zu Hart-PVC umgewandelt und kann zusammen mit dem übrigen Hart-PVC zu Granulat gemahlen und in der üblichen Weise der Wiederverwertung zugeführt werden. Ein Nachteil dieses Verfahrens besteht darin, daß eine Kreislauf-Wiederverwertung nicht möglich ist, da Hart-PVC im Überschuß entsteht und Weich-PVC ständig verbraucht wird. Darüber hinaus entstehen sehr unterschiedliche Qualitäten des umgewandelten Hart-PVC, die die Wiederverwertung problematisch machen.

Der Erfindung liegt die Problemstellung zugrunde, eine vorteilhaftere Art der Aufarbeitung der mit einem Überzug aus Weich-PVC versehenen Hart-PVC-Teile zu ermöglichen.

Ausgehend von dieser Problemstellung ist erfindungsgemäß ein Verfahren der Eingangs erwähnten Art dadurch gekennzeichnet, daß das Weich-PVC vom Hart-PVC-Teil mit Hilfe einer einen für das Weich-PVC geeigneten Weichmacher enthaltenden Flüssigkeit getrennt wird und das die Hart-PVC-Teile und das abgelöste Weich-PVC separat zur Wiederverwendung aufbereitet werden.

Das erfindungsgemäße Verfahren beruht auf dem Gedanken, daß Weich-PVC vom Hart-PVC-Teil abzutrennen. Dies gelingt durch die Verwendung eines Weichmachers, durch den das Weich-PVC noch weicher gemacht wird und somit in einen fließfähigen Zustand übergeht, indem es sich von dem Hart-PVC-Teil wieder löst.

Besonders bevorzugt ist es, als Weichmacher zum Ablösen des Weich-PVC einen solchen Weichmacher zu verwenden, der in dem Weich-PVC als Bestandteil enthalten ist. Dies bietet den wesentlichen Vorteil, daß kein zusätzlicher Stoff mit dem PVC in Berührung kommt, der nicht bereits in dem Weich-PVC enthalten ist, so daß eine Trennung verschiedener Stoffe nicht erforderlich wird.

Das Weich-PVC kann von dem Weichmacher in einfacher Weise beispielsweise durch Sedimentation getrennt werden. Andere Trennverfahren, insbesondere mechanische, wie Dekantieren und Zentrifugieren, sind ebenfalls möglich.

Die Zuführung des Weich-PVC zur Wiederverwendung als Weich-PVC für den Unterbodenschutz erfolgt vorzugsweise durch eine Filtrierung des Weich-PVC, wodurch Hart-PVC und Verunreinigungen zurückgehalten werden, die der Wiederverwendung entgegenstehen würden. Eine Korngrößengrenze für die Wiederverwertung des Weich-PVC als Unterbodenschutz ist 400 µm.

Vorzugsweise werden die Hart-PVC-Teile zunächst einer Wäsche mit der dem Weichmacher enthaltenden Flüssigkeit und anschließend einer Spülung mit einer weiteren, den Weichmacher enthaltenden Flüssigkeit unterzogen.

Nach der Behandlung werden die Hart-PVC-Teile getrocknet und anschließend gemahlen und kann zur erneuten Herstellung von Abdeckschablonen genutzt werden.

Die Erfindung erlaubt somit eine Materialverwertung im Kreislauf, die insbesondere für das Weich-PVC und die Weichmacherlösung wesentlich ist. Das Weich-PVC kann wieder zur Herstellung eines Unterbodenschutzes und die überstehende Weichmacherlösung erneut zum Abwaschen bzw. Abspülen des Weich-PVC von den Hart-PVC-Teilen verwendet werden, wodurch eine Verwertung auf gleicher Wertschöpfungsstufe realisiert wird.

Eine Vorrichtung zur Durchführung des erfindungsgemäßen Verfahren ist gekennzeichnet durch eine Zerkleinerungseinrichtung für die mit dem Weich-PVC überzogenen Hart-PVC-Teile, eine Waschstufe, in der die Hart-PVC-Teile in intensiven Kontakt mit der den Weichmacher enthaltenden Flüssigkeit gehalten werden, eine Nachreinigungsstufe zum Abspülen der Hart-PVC-Teile, mit der dem Weichmacher enthaltenden Flüssigkeit und einer Auffang- und Trennstufe für das Weichmacher-/Weich-PVC-Gemisch zur Trennung von Weich-PVC und Weichmacherflüssigkeit.

An die Auffang- und Trennstufe ist vorzugsweise eine Filterstufe angeschlossen, die nur eine maximale Korngröße des zur Wiederverwertung transportierten Weich-PVC durchläßt, wobei die Filterbreite vorzugsweise 400 µm beträgt und die Filterstufe vorzugsweise durch einen Kantenspaltfilter gebildet ist.

Die Waschstufe ist vorzugsweise mit einer Rhönrad-Schneckentrommel zur Umwälzung der Hart-PVC-Teile in der den Weichmacher enthaltenden Flüssigkeit versehen.

Vorzugsweise schließt sich an die erfindungsgemäße Vorrichtung eine Spülanlage zum Abspülen der Hart-PVC-Teile mit der den Weichmacher enthaltenden Flüssigkeit und ein Trockner an.

Die getrockneten Hart-PVC-Teile können dann gemahlen und wiederverwendet werden.

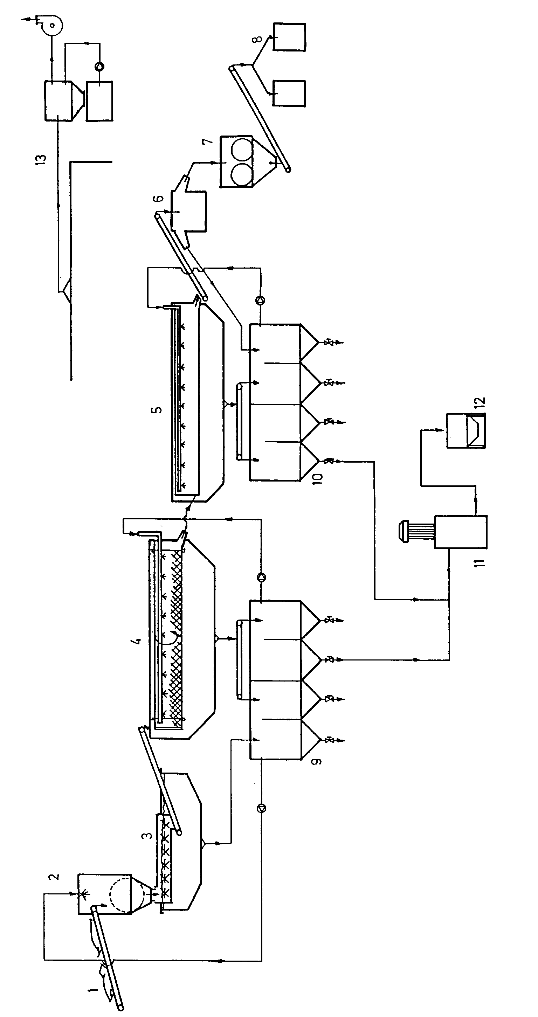

Die Erfindung soll nachstehend an Hand eines in der Zeichnung dargestellten Ausführungsbeispiels näher erläutert werden.

In der Zeichnung ist ein Förderband 1 erkennbar, mit dem die aufzubereitenden Teile einer Grobzerkleinerungsanlage 2 zugeführt werden. Die grob zerkleinerten und mit Weich-PVC verklebten Hart-PVC-Teile werden in einer Vereinzelungsstufe 3 voneinander getrennt. In der Vereinzelungsstufe 3 schwimmen die Hart-PVC-Teile in einem Bad einer den Weichmacher enthaltenden Flüssigkeit und werden durch langsam routierende Flügel bewegt, wodurch der Trennvorgang der aneinanderklebenden Hart-PVC-Teile bewirkt wird.

Die vereinzelten Teile werden in eine Waschstufe 4 transportiert, in der eine Rhönrad-Schneckentrommel die Hart-PVC-Teile an denen Weich-PVC haftet bewegt, wobei diese Teile zugleich mit einer Niederdruck-Spritzanlage mit der Weichmacherflüssigkeit gereinigt werden. Die Spritzanlage arbeitet dabei innerhalb der Trommel.

Die Hart-PVC-Teile werden anschließend in einer Spülstufe mit Weichmacherflüssigkeit abgespritzt und dabei innerhalb einer Schneckentrommel bewegt. Am Ende dieser Spülstufe beträgt die Weich-PVC-Anhaftung noch maximal 1 %. Die so gereinigten Hart-PVC-Teile gelangen in einen Trockner 6 aus dem sie in getrockneter Form in ein Mahlwerk 7 übergeführt werden. Im Mahlwerk werden die Hart-PVC-Teile zu einem Granulat von 4 bis 6 mm Korngröße zerkleinert und anschließend in geeignete Behälter 8 verpackt, die Big Bags, Kartons oder Container sein können. Aus dem Hart-PVC-Granulat werden vorzugsweise wieder Abdeckschablonen hergestellt.

In der Vereinzelungsstufe 3, der Waschstufe 4 und der Spülstufe 5 fallen Weichmacher-/Weich-PVC-Gemische an die in Sammelbehälter 9 bzw. 10 geleitet werden. Die Behälter 9, 10 sind als Sedimentierbehälter ausgebildet, so daß im oberen Bereich der Behälter weitgehend reine Weichmacherflüssigkeit abgezogen und zum Bestrühen der verunreinigten Hart-PVC-Teilen in der Grobzerkleinerungsanlage 2 bzw. der Vereinzelungsanlage 3, der Waschstufe 4 oder der Spülstufe 5 zugeführt werden können.

Das als Sediment abgesetzte Weich-PVC mit den Sammelbehältern 9, 10 entnommen und dem Kantenspaltfilter 11 mit einer Spaltbreite von 400 µm zugeführt. Das den Kantenspaltfilter durchlaufende Weich-PVC hat somit eine Korngröße von maximal 400 µm und gelangt in einen Transportcontainer 12, um zur Herstellung von Unterbodenschutz wieder verwendet zu werden.

In der Zeichnung ist schematisch angedeutet, daß die gesamte Anlage in einem geschlossenem Raum untergebracht ist, aus dem Abluft 13 mit einer Abluftanlage aufbereitet und in gereinigter Form in die Atmosphäre geblasen wird.

Das Ausführungsbeispiel läßt deutlich erkennen, daß Kreisläufe der Weichmacherflüssigkeit mit den Stufen 2, 3 und dem Sammelbehälter 9, mit der Stufe 4 und dem Sammelbehälter 9 und der Stufe 5 und dem Sammelbehälter 10 gebildet sind, so daß die Weichmacherflüssigkeit immer im Kreislauf umgepumpt wird. Die Trennung des Weich-PVC von den Hart-PVC-Teilen gelingt ohne die Verwendung von Fremdstoffen, die in den beteiligten Ausgangsstoffen nicht enthalten gewesen wären. Dies erleichtert die Wiederverwertung in besonderem Maße.

## Patentansprüche

1. Verfahren zur Aufarbeitung von mit einem Überzug aus Weich-PVC versehenen Hart-PVC-Teilen zum Zwecke der Wiederverwertung, **dadurch gekennzeichnet, daß** das Weich-PVC vom Hart-PVC-Teil mit Hilfe einem für das Weich-PVC geeigneten Weichmacher enthaltenden Flüssigkeit getrennt wird und das die Hart-PVC-Teile und das abgelöste Weich-PVC separat zur Wiederverwendung aufbereitet werden.

2. Verfahren nach Anspruch 1, **dadurch gekennzeichnet, daß** das der Weichmacher in der Flüssigkeit mit dem im Weich-PVC enthaltenden Weichmacher identisch ist.

3. Verfahren nach Anspruch 1 oder 2, **dadurch gekennzeichent, daß** das Weich-PVC von dem Weichmacher durch Sedimentation, Dekantieren oder Zentrifugieren getrennt wird.

4. Verfahren nach einem der Ansprüche 1 bis 3, **gekennzeichnet durch** eine Filtrierung des Weich Weich-PVC und seiner Verwendung zur Wiederaufbereitung mit einer maximal zulässigen Korngröße.

5. Verfahren nach Anspruch 4, **dadurch gekennzeichent, daß** zur Wiederaufbereitung eine maximale Korngröße von 400 µm verwendet wird.

6. Verfahren nach einem der Ansprüche 1 bis 5, **dadurch gekennzeichnet, daß** die Hart-PVC-Teile nach einer Wäsche mit der Weichmacherflüssigkeit einer Spülung mit einer weiteren, den Weichmacher enthaltenden Flüssigkeit unterzogen werden.

7. Verfahren nach einem der Ansprüche 1 bis 6, **dadurch gekennzeichnet, daß** die Hart-PVC-Teile nach der Behandlung mit der den Weichmacher enthaltenden Flüssigkeit getrocknet und anschließend zu Granulat gemahlen werden.

8. Vorrichtung zur Durchführung des Verfahrens nach einem der Ansprüche 1 bis 7, **gekennzeichnnet durch** eine Zerkleinerungseinrichtung (2) für die mit dem Weich-PVC überzogenen Hart-PVC-Teile,
- eine Waschstufe (4), in der die Hart-PVC-Teile in intensiven Kontakt mit der den Weichmacher enthaltenden Flüssigkeit gehalten werden,
- eine Nachreinigungsstufe (5) zum Abspritzen der Hart-PVC-Teile mit der den Weichmacher enthaltenden Flüssigkeit,
- eine Auffang- und Trennstufe (9, 10) für das Weichmacher-/Weich-PVC-Gemisch zur Trennung von Weich-PVC und Weichmacherflüssigkeit.

9. Vorrichtung nach Anspruch 8, **gekennzeichnet durch** eine an die Auffang- und Trennstufe (9 , 10) angeschlossene Filterstufe (11), die nur eine maximale Teilchengröße durchläßt.

10. Vorrichtung nach Ansprüch 9, **gekennzeichenet durch** eine Filterbreite der Filterstufe (11) von 400 µm.

11. Vorrichtung nach Anspruch 9 oder 10, **dadurch gekennzeichnet, daß** die Filterstufe (11) durch einen Kantenspaltfilter gebildet ist.

12. Vorrichtung nach einem der Ansprüche 9 bis 11, **dadurch gekennzeichenet, daß** die Waschstufe (4) mit einer Rhönrad-Schneckentrommel zu Umwälzung der Hart-PVC-Teile in Kontakt mit der den Weichmacher enthaltenden Flüssigkeit aufweist.

13. Vorrichtung nach einem der Ansprüche 1 bis 12, **gekennzeichnet durch** eine nachgeschaltete Trockenstufe (6), an die ein Mahlwerk (7) für die getrockneten Hart-PVC-Teile angeschlossen ist.
